# EUROPEAN PATENT APPLICATION

(11) **EP 4 741 916 A1**
(43) Date of publication of application: **13.05.2026**
(21) Application number: 24835206.4
(22) Date of filing: 14.06.2024
(51) Int. Cl.: G02F 1/153

(54) **ELECTROCHROMIC FILM, COLOR-CHANGING DEVICE, AND TERMINAL PRODUCT**

(30) Priority: 04.07.2023 CN 202310812936
(71) Applicant: Guangyi Intelligent Tech (Suzhou) Co., Ltd., Suzhou, Jiangsu 215000 (CN)
(72) Inventor: WANG, Weishu, Suzhou, Jiangsu 215000 (CN); LU, Yicai, Suzhou, Jiangsu 215000 (CN)
(74) Representative: Biallo, Dario
(86) International application number: PCT/CN2024/099266
(87) International publication number: WO 2025/007723

(57) **Abstract**

The present application provides an electrochromic film, a color-changing device, and a terminal product, relating to the field of electrochromic technology. The electrochromic film includes a central portion and an edge portion adjacent to the central portion, the edge portion being electrically connected to a busbar; at least a local region of the edge portion is provided with a blocking portion, through which the current of the busbar is blocked or reduced from being conducted from the blocking portion to the central portion. By providing blocking portion at the edge of the electrochromic film, the current from the busbar is blocked or reduced from being conducted from the blocking portion to the central portion of the electrochromic film. This prevents current from directly flowing from the conductive layer provided with the blocking portion to the conductive layer in the central portion, or reduces the current flowing from the conductive layer provided with the blocking portion to the conductive layer in the central portion. This avoids failure caused by overcharging or over-discharging in the corner regions of the electrochromic film, thereby improving the stability and uniformity of the electric field strength of the electrochromic film and extending the service life of the electrochromic film.

## Description

### CROSS REFERENCE TO RELATED APPLICATIONS

The present application claims priority to Chinese Patent Application No. 2023108129363, filed on July 4, 2023, entitled "electrochromic film, color-changing device, and terminal product," the entire contents of which are incorporated herein by reference.

### TECHNICAL FIELD

The present application relates to the technical field of electrochromism, and more particularly to an electrochromic film, a color-changing device, and a terminal product.

### BACKGROUND

Electrochromism is a technology in which electrochromic materials undergo reversible and stable coloring and bleaching under the action of an external voltage. Typically, by setting busbars on the two substrate layers of an electrochromic film, the electrochromic film is electrically connected to an external power source through the busbars, thereby forming a voltage across the two ends of the electrochromic material, causing the electrochromic material of the electrochromic film to change color in response to changes in the voltage across the two ends.

Currently, during use, the color-changing endpoint of the electrochromic film in the corner region of the film fails to reach the preset transmittance and thus fails prematurely.

### SUMMARY

In view of this, it is an objective of the present application to overcome the shortcomings of the prior art and provide an electrochromic film, a color-changing device, and a terminal product.

The present application provides the following technical solution: an electrochromic film, and the electrochromic film includes a central portion and an edge portion adjacent to and connected to the central portion, and the edge portion being electrically connected to a busbar;
at least a local region of the edge portion is provided with a blocking portion, such that a current from the busbar is blocked or reduced from being conducted toward the central portion at the location of the blocking portion.

Optionally, the blocking portion is located at a corner of the edge portion.

Optionally, the corner includes a vertex and two ends with edges connected to each other, the edge portion located between two points is divided into a first segment and a second segment, when a line tangent to the first segment through a point is a first tangent line, and a line tangent to the second segment through the point is a second tangent line; and the angle between the first tangent line and the second tangent line is less than 135°, then the point is the vertex of the corner; or, a perpendicular distance from any point on the edge portion corresponding to two points at a first preset distance to a line segment connecting the two points is a second preset distance; when the second preset distance is greater than *n* times the first preset distance, *n* ranges from 5% to 10%, and the edge portion corresponding to the two points is the corner.

Optionally, a value of the first preset distance ranges from 30 mm to 300 mm.

Optionally, the blocking portion includes an etched region formed by etching a portion of a conductive layer and/or a component with a resistance greater than that of the busbar.

Optionally, the blocking portion at least penetrates through the conductive layer of the edge portion in contact with the busbar and is located on a side of the busbar adjacent to the central portion; and/or the blocking portion is disposed between the busbar and the conductive layer, and a resistance of the blocking portion is greater than a resistance of the busbar.

Optionally, the electrochromic film includes a first substrate layer, a first conductive layer, an electrochromic layer, a second conductive layer, and a second substrate layer stacked sequentially; the edge portion is provided with a first groove and a second groove, and the busbar includes a first busbar and a second busbar;
the first groove penetrates through the first substrate layer, the first conductive layer, and the electrochromic layer along a thickness direction of the electrochromic film to expose a portion of the second conductive layer, forming a first electrode, and the first electrode is electrically connected to the first busbar; and
the second groove penetrates through the second substrate layer, the second conductive layer, and the electrochromic layer along the thickness direction of the electrochromic film to expose a portion of the first conductive layer, forming a second electrode, and the second electrode is electrically connected to the second busbar.

Optionally, the blocking portion arranged corresponding to the first electrode penetrates through the second conductive layer, and/or the blocking portion arranged corresponding to the second electrode penetrates through the first conductive layer.

Optionally, the blocking portion insulates and separates the first electrode from the central region of the first conductive layer, and/or the blocking portion insulates and separates the second electrode from the central region of the second conductive layer.

Optionally, the first electrode includes a first straight-edge electrode and a first corner electrode, the first corner electrode is located at the corner of the electrochromic film, the first corner electrode and the first straight-edge electrode are spaced apart from each other on the edge portion, and the blocking portion is disposed corresponding to the first corner electrode; and/or the second electrode includes a second straight-edge electrode and a second corner electrode, the second corner electrode is located at the corner of the electrochromic film, the second corner electrode and the second straight-edge electrode are spaced apart from each other on the edge portion, and the blocking portion is disposed corresponding to the second corner electrode.

Optionally, the blocking portion penetrates through at least the first conductive layer and the second conductive layer.

Optionally, the blocking portion penetrates through the first conductive layer, the electrochromic layer, and the second conductive layer; and the blocking portion further penetrates through the first substrate and/or the second substrate.

Optionally, a total length of the blocking portion is less than a sum of lengths of the first straight-edge electrode and the second straight-edge electrode.

Optionally, a length of the blocking portion is not less than a length of the first corner electrode, and/or a length of the blocking portion is not less than a length of the second corner electrode.

Optionally, the blocking portion extends along at least one of extending directions of the first corner electrode, and extends to be located between the first corner electrode and an adjacent first straight-edge electrode; and/or the blocking portion extends along at least one of extending directions of the second corner electrode, and extends to be located between the second corner electrode and an adjacent second straight-edge electrode.

Optionally, the blocking portion forms a blocking region with an outer edge of the electrochromic film, the first corner electrode is located in the blocking region, and/or the second corner electrode is located in the blocking region.

Optionally, the blocking portion is a linear structure, and the linear structure including at least one of a straight line, a broken line, a curve, and an arc.

Optionally, the blocking portion is a planar structure, and the planar structure including at least one of a polygon, a sector, and an arc surface.

Optionally, a distance between the blocking portion and the busbar ranges from 0.3 mm to 20 mm.

Optionally, the distance between the blocking portion and the busbar is 1 mm.

Some embodiments of the present application provides a color-changing device, which includes a substrate layer and the electrochromic film mentioned above stacked with the substrate layer.

Some embodiments of the present application provides a terminal product, which includes an electrochromic film according to any one mentioned above or a color-changing device mentioned above, and the terminal product includes any one of a rearview mirror, a curtain wall, a sunroof of a vehicle, a side window of a vehicle, a windshield of a vehicle, a housing of an electronic product, eyeglasses, means of transportation, and a display panel.

The embodiments of the present application have the following advantages: by providing a blocking portion corresponding to a certain region at the edge of the electrochromic film, the current from the busbar is blocked or reduced from being conducted from the blocking portion to the central portion of the electrochromic film. This avoids the current being directly conducted from the conductive layer provided with the blocking portion to the conductive layer in the central portion, or reduces the current being conducted from the conductive layer provided with the blocking portion to the conductive layer in the central portion. This prevents overcharging or over-discharging in certain regions at the edge portion of the electrochromic film, thus avoiding premature failure and improving the uniformity of the electric field strength of the electrochromic film, thereby increasing the service life of the electrochromic film.

In order to make the above-mentioned objects, features, and advantages of the present application more apparent and understandable, preferred embodiments are described below in detail with reference to the accompanying drawings.

### BRIEF DESCRIPTION OF THE DRAWINGS

In order to more clearly illustrate the technical solutions of the embodiments of the present application, the drawings used in the embodiments will be briefly described below. It should be understood that the following drawings only show some embodiments of the present application and should not be regarded as a limitation of the scope. For those skilled in the art, other related drawings can be obtained based on these drawings without creative effort.
FIG. 1 shows a structural schematic diagram of an embodiment of an electrochromic film of the present application;
FIG. 2 shows an enlarged view of a part A in FIG. 1;
FIG. 3 shows a structural schematic diagram of a first conductive layer of an embodiment of an electrochromic film of the present application;
FIG. 4 shows a structural schematic diagram of the second conductive layer of an embodiment of an electrochromic film of the present application;
FIG. 5 shows a structural schematic diagram of another embodiment of an electrochromic film of the present application;
FIG. 6 shows an enlarged view of a part C in FIG. 5;
FIG. 7 shows a structural schematic diagram of yet another embodiment of an electrochromic film of the present application;
FIG. 8 shows an enlarged view of a part D in FIG. 7;
FIG. 9 shows a structural schematic diagram of another embodiment of an electrochromic film of the present application;
FIG. 10 shows a structural schematic diagram of another embodiment of an electrochromic film of the present application;
FIG. 11 shows a structural schematic diagram of another embodiment of an electrochromic film of the present application;
FIG. 12 shows a structural schematic diagram of another embodiment of an electrochromic film of the present application;
FIG. 13 shows a cross-sectional view of a section B-B in FIG. 12;
FIG. 14 shows an enlarged view of a section E in FIG. 12;
FIG. 15 shows a structural schematic diagram of another embodiment of an electrochromic film of the present application;
FIG. 16 shows a structural schematic diagram of another embodiment of an electrochromic film of the present application;
FIG. 17 shows a structural schematic diagram of another embodiment of an electrochromic film of the present application;
FIG. 18 shows a structural schematic diagram of another embodiment of an electrochromic film of the present application; and
FIG. 19 shows an enlarged view of a section F in FIG. 18.

The main reference signs are listed as following:
100-electrochromic film; 110-central portion; 120-edge portion; 130-first substrate layer; 140-first conductive layer; 150-electrochromic layer; 160-second conductive layer; 170-second substrate layer; 141-second electrode; 141a-second straight-edge electrode; 141b-second corner electrode; 161-first electrode; 161a-first straight-edge electrode; 161b-first corner electrode; 180-first groove; 181-first corner groove; 182-first straight-edge groove; 190-second groove; 191-second corner groove; 192-second straight-edge groove; 200-first blocking portion; 300-second blocking portion; 400-first busbar; and 500-second busbar.

### DETAILED DESCRIPTION OF THE EMBODIMENTS

Embodiments of the present application are described in detail below, examples of which are shown in the accompanying drawings. The same or similar reference numerals denote the same or similar elements or elements having the same or similar functions throughout. The embodiments described below with reference to the accompanying drawings are exemplary and are only used to explain the present application, and should not be construed as limiting the present application.

It should be noted that when an element is referred to as being "fixed to" another element, it can be directly on the other element or there may be an intervening element. When an element is considered to be "connected to" another element, it can be directly connected to the other element or there may be an intervening element. Conversely, when an element is referred to as being "directly arranged on" another element, there is no intervening element. The terms "vertical," "horizontal," "left," "right," and similar expressions used herein are for illustrative purposes only.

In the present application, unless otherwise expressly specified and limited, the terms "installed," "connected," "linked," "fixed," etc., should be interpreted broadly. For example, they can refer to a fixed connection, a detachable connection, or an integral part; they can refer to a mechanical connection or an electrical connection; they can refer to a direct connection or an indirect connection through an intermediate medium; they can refer to the internal connection of two components or the interaction between two components. Those skilled in the art can understand the specific meaning of the above terms in the present application according to the specific circumstances.

Furthermore, the terms "first" and "second" are used for descriptive purposes only and should not be construed as indicating or implying relative importance or implicitly specifying the number of indicated technical features. Thus, a feature defined as "first" or "second" may explicitly or implicitly include one or more of that feature. In the description of the present application, "a plurality of" means two or more, unless otherwise expressly and specifically limited.

Unless otherwise defined, all technical and scientific terms used herein have the same meaning as commonly understood by those skilled in the art to which the present application pertains. The terminology used herein in the template description is for the purpose of describing particular embodiments only and is not intended to limit the present application. As used herein, the term "and/or" includes any and all combinations of one or more of the associated listed items.

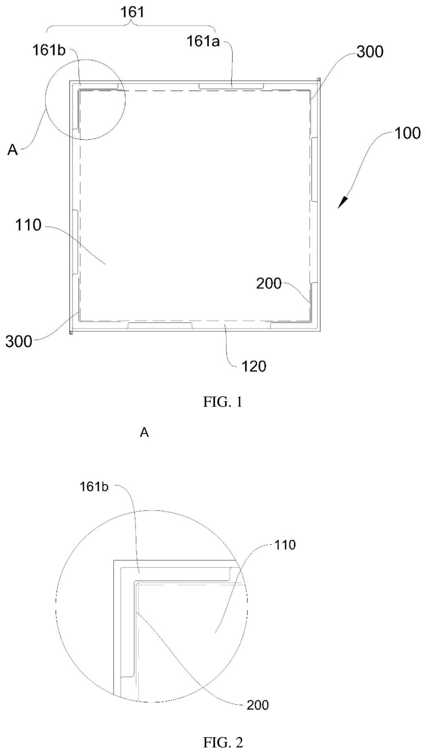

The present application will now be described in detail with reference to FIGS. 1 to 19.

Embodiments of the present application provide an electrochromic film that can change its color in response to changes in voltage, thereby regulating the transmittance of the film. It is mainly used in large-area devices such as windows, including building curtain walls, sunroofs of a vehicle, side windows of a vehicle, and aircraft windows, for dimming and shading purposes.

As shown in FIG. 1, the electrochromic film 100 includes a central portion 110 and an edge portion 120 adjacent to the central portion 110. The edge portion 120 is connected to the central portion 110 and extends outward from the electrochromic film 100. A busbar is electrically connected to the edge portion 120; the busbar can be a conductive material such as a copper foil, a silver wire, or a conductive resin. When the busbar is electrically connected to an external power source, the busbar conducts the current from the external power source to the conductive layer of the electrochromic film 100, thereby achieving an electrical connection between the electrochromic film 100 and the external power source.

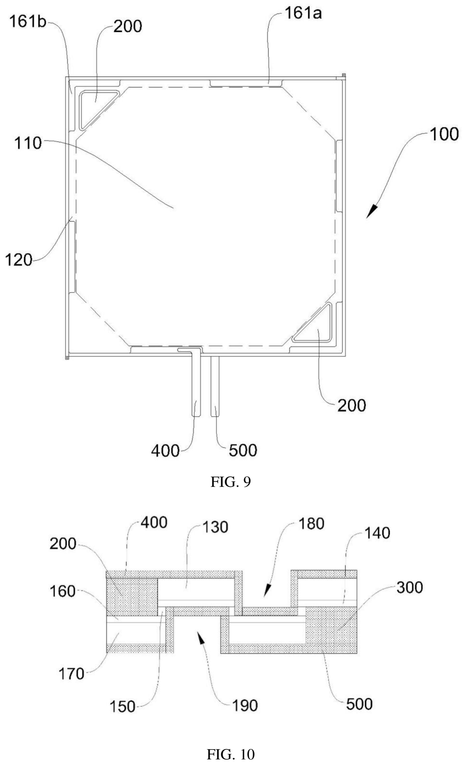

In the embodiment of the present application, the central portion 110 is the visible region of the electrochromic film 100, and the edge portion 120 is the non-visible region of the electrochromic film 100. By adjusting the transmittance of the visible region, the transmittance of the film can be adjusted, or the amount of light passing through the electrochromic film 100 can be adjusted, allowing the user to observe the scene on the other side of the film through the visible region. Furthermore, in some other embodiments of the present application, the central portion 110 is the color-changing region of the electrochromic film 100, and the edge portion 120 is the non-color-changing region of the electrochromic film 100. For ease of understanding, as shown in FIGS. 1 and 9. The edge portion 120 refers to the region formed between the dashed frame and the solid frame at the outer edge of the electrochromic film 100. The central portion 110 of the electrochromic film 100 refers to the region enclosed by the dashed frame. However, the dashed lines do not define the specific locations of the edge portion 120 and the central portion 110.

As shown in FIGS. 1 and 2, in the embodiment of the present application, at least a portion of the edge portion 120 of the electrochromic film 100 is provided with a blocking portion to block or reduce current conduction from the conductive layer of the blocking portion to the conductive layer of the central portion 110. In the embodiment of the present application, blocking current means that the current will not be directly conducted from the blocking portion to the conductive layer of the central portion 110. Reducing current means that the current conducted from the busbar through the blocking portion to the conductive layer of the central portion 110 is smaller than the current of the busbar. It should be noted that the shape of a partial region of the edge portion 120 provided with the blocking portion includes at least one of the following: a linear, a planar, a graphic, a polygonal, or a pseudo-shape.

It is worth noting that the inventors have found that the regions where the electrochromic film 100 is prone to failure include at least the regions with low surface resistance. Low surface resistance means that, compared to two points or two regions in the entire film, the region with lower surface resistance is lower. Because the surface resistance of this region is lower, when a current of a certain voltage is applied to the busbar, the current transmitted from the region with lower surface resistance to the central region is usually greater than the current in the region with higher surface resistance. Therefore, the conductive layer in the region with lower surface resistance will be in a high-current environment for a long time, which will cause the conductive layer in this region to age on the one hand, and cause the electrochromic layer 150 in this region to be overcharged or over-discharged on the other hand, thus causing this region to fail earlier than other regions. In addition, the regions with low surface resistance include at least one of the following: the overlapping part of the busbar, the corner of the electrochromic film 100, and the part with low surface resistance of the conductive layer. The resistance of the busbar is lower than that of the conductive layer. When two busbars are overlapped, whether by overlapping (equivalent to increasing the thickness of the busbar) or by parallel contact (equivalent to increasing the contact area between the busbar and the conductive layer), the number of busbars in the region corresponding to the overlap is greater than that in the region where only one busbar is placed. Therefore, the surface resistance at the overlapping region of the busbar is usually lower than that at the non-overlapping region. The busbars on the electrochromic film 100 are usually attached along the edge of the electrochromic film 100. Corresponding to the corners of the electrochromic film, or in other words, the busbars bend at the corners and extend to both sides. Therefore, there are two busbars in the corner region, while there is only one busbar in the non-corner region. Thus, the surface resistance of this region is lower than that of other non-corner regions. The region with lower surface resistance of the conductive layer may be due to the material of the conductive layer being different from that of other regions, or it may be due to the thickness of the conductive layer in that region being greater than that of the conductive layer in other regions. Various surface resistance unevenness situations may exist on the same electrochromic film 100. The embodiments of the present application are not limited to providing the blocking portion in a single scheme; it can be any combination of regions. Therefore, in the embodiments of the present application, the blocking portion can be positioned corresponding to the region of the electrochromic film 100 with lower surface resistance, such as at any location including overlapping regions of the busbar, corners of the electrochromic film 100, and regions with lower surface resistance on the conductive surface. This blocks or reduces the current transmitted from these regions to the central portion 110, thereby achieving a current in the region with lower surface resistance that is close to the current in the region with higher surface resistance, thus delaying the rate of corner failure.

Optionally, further improvements are made based on the above embodiments, as shown in FIGS. 1 to 6, where the blocking portion is located at the corner of the edge portion 120. It should be noted that in this embodiment, the electrochromic film 100 is a regular polygonal structure, and the corner includes the end of two sides connected together, with the included angle between the two sides being less than 135°. The corner refers to a location where the included angle formed by connecting the ends of two adjacent sides in the edge portion 120 of the electrochromic film 100, which is the corner of the edge portion 120. It is worth noting that the sides include straight sides and sides with a small degree of curvature that are considered straight sides. Optionally, if the included angle between two straight sides is less than 135°, then that location is considered a corner. In other embodiments, the shape of the electrochromic film 100 can be irregular. For irregular shapes, there are curved parts at the edges, which correspond to the corners of the film. Furthermore, it can be defined that if the curvature of the edge portion 120 is greater than a preset value, it is a corner; if the curvature is less than a preset value, it is considered a straight edge, this part can be approximated as a straight edge.

In addition, the straight edge involved in the present application does not need to be a perfectly straight line. In an optional embodiment of the present application, the perpendicular distance from any point on the edge portion 120 between two points at a first preset distance to the line segment connecting the two points is a second preset distance. When the second preset distance is less than or equal to n times the first preset distance, where n ranges from 5% to 10%, the edge portion 120 between the two points is a straight edge. Alternatively, the edge portion 120 between the two points can be divided into a first segment and a second segment. The line tangent to the first segment through the point is the first tangent line, and the line tangent to the second segment through the point is the second tangent line. When the angle between the first tangent line and the second tangent line is greater than or equal to 135°, the corresponding edge portion 120 between the two points is a straight edge. Optionally, the value range of the first preset distance is 30 mm to 300 mm. Further optionally, the first preset distance is 5 cm to 20 cm; the second preset distance is 5% to 10% of the first preset distance, preferably 6% of the first preset distance. For example, if the distance between the farthest point of the electrodes corresponding to two points with a first preset distance of 5 cm is less than 0.3 cm from the line connecting the two points, or if the distance between the farthest point of the electrodes corresponding to two points with a distance of 10 cm is less than 0.5 cm from the line connecting the two points, or if the distance between the farthest point of the electrodes corresponding to two points with a distance of 20 cm is less than 1 cm from the line connecting the two points, then the corresponding portion within these two points is considered a straight edge. Specifically, the size of the first preset distance is related to the size of the electrochromic device, the material of the conductive layer, and the length of the electrodes of the electrochromic device, and can be adjusted accordingly based on the specific application. The corner includes a vertex and two ends with edges connected to each other. The edge portion 120 between the two points is divided into a first segment and a second segment. The line tangent to the first segment through the point is the first tangent line, and the line tangent to the second segment through the point is the second tangent line. When the angle between the first tangent line and the second tangent line is less than 135°, the point is considered the vertex of the corner.

In an optional embodiment, the perpendicular distance from any point on the edge portion 120 between two points corresponding to the first preset distance is the second preset distance. When the second preset distance is greater than n times the first preset distance, where n ranges from 5% to 10%, the edge portion 120 corresponding to the two points is considered a corner, and the region formed by the edge portion 120 corresponding to the two points is a corner region, and the corresponding electrode is a corner electrode.

In an optional embodiment of the present application, the corner is formed by the intersection of two straight edges, and the angle between the two straight edges is less than 135°. The corner region is the region formed between the ends of the two straight edges connected together, and the included angle between the two straight edges is less than 135°. The length of the ends of the straight edges is specifically set according to the size of the electrochromic device. Alternatively, the region between the edge portions 120 corresponding to the maximum distance between the lines connecting the two endpoints is greater than the second preset distance is the corner region.

In this embodiment of the present application, by providing the blocking portion to reduce the current in the corner region, the electric field strength in the corner region is reduced, the aging rate of the conductive layer in that region is decreased, and the possibility of overcharging and over-discharging of the electrochromic layer 150 in that region is also reduced. This achieves a balance between the electric field strength in the corner region and the non-corner region of the edge portion 120 of the electrochromic film 100, avoiding corner or local aging failure of the entire electrochromic film 100, and improving the stability and durability of the electrochromic film 100.

Optionally, improvements are made based on any of the above embodiments. The busbar contacts the conductive layer at the corner of the film, and the included angle formed by the two busbars at the corner is between 45° and 135°. The busbar at the corner can be an irregularly shaped busbar, formed by stamping a piece of copper foil to conform to the shape of the corner, or it can be two busbars overlapping each other at the corner, or some corners can use irregularly shaped busbars and some corners can use two busbars overlapping each other. Since the busbars on the electrochromic film 100 are concentrated at the corners, the surface resistance of the entire film is relatively small at the corners. Therefore, placing the blocking portion at the corner reduces the current at that location, so as to balance the current in the conductive layer corresponding to the corner region with the current in the non-corner region, thus preventing the corner region from being overcharged and over-discharged for a long time and failing prematurely.

Optionally, improvements are made based on any of the above embodiments, the edge portion 120 of the electrochromic film 100 includes at least a first side, a second side, and a third side connected end-to-end. In this embodiment, a fourth side is also included. The edges are connected end-to-end to form a closed edge portion 120 of the electrochromic film 100. In other embodiments, depending on the width of each side of the film, the edges may also form an open edge portion 120. The busbars include a first busbar 400 and a second busbar 500. The first busbar 400 is attached to the exposed first conductive layer 140 along each side (such as the first side). The first busbar 400 cannot be bent at the corner formed by the first and second sides, therefore, it is necessary to break the first busbar 400 at the corner to form the first busbar segment corresponding to the first side, and then form an overlapping region at the corner and extend and attach it in the other direction (the second side), and break at the corners of the second and third sides to form the second busbar segment corresponding to the second side, and so on, and finally enclose to form a closed structure. The attachment method of the second busbar 500 is the same as that of the first busbar 400, and will not be described in detail here. Since each busbar needs to overlap, the thickness of the overlapping region is greater than that of the non-overlapping region. Therefore, the overlapping region will affect the uneven force on the edge of the film during the lamination process, which may cause the film to crack. Therefore, a groove is set at the corner to form an electrode region. The thickness of the electrode region is relatively smaller than that of the non-electrode region. The overlapping region is set in the electrode region, and the thicker part is set in the thinner part, so that the thickness of the entire electrochromic film 100 edge is more uniform. This reduces the risk of cracking due to uneven stress on the edge of the electrochromic film 100 during the lamination process, and improves the life cycle of the entire device. Moreover, the bonding and overlapping method is simpler and less expensive than the stamping process.

In addition, in this embodiment, the blocking portion is set at the corner of the film. When the electrochromic film 100 is first charged and discharged, the color change in the region corresponding to the blocking portion is relatively slow due to the setting of the blocking portion. After charging for a period of time, the current diffuses through the conductive layer in the non-corner region to the conductive layer in the corner region, and finally achieves the color-changing balance of the entire surface. Because the corner is far from the center, users tend to notice the central portion 110 of the visible region first when observing, and the corner is less likely to cause visual impact at first glance. Therefore, placing the blocking portion in the corner will cause the region where the color-changing speed slows down to the corner region without causing visual error or impact on the user, thereby improving the user experience.

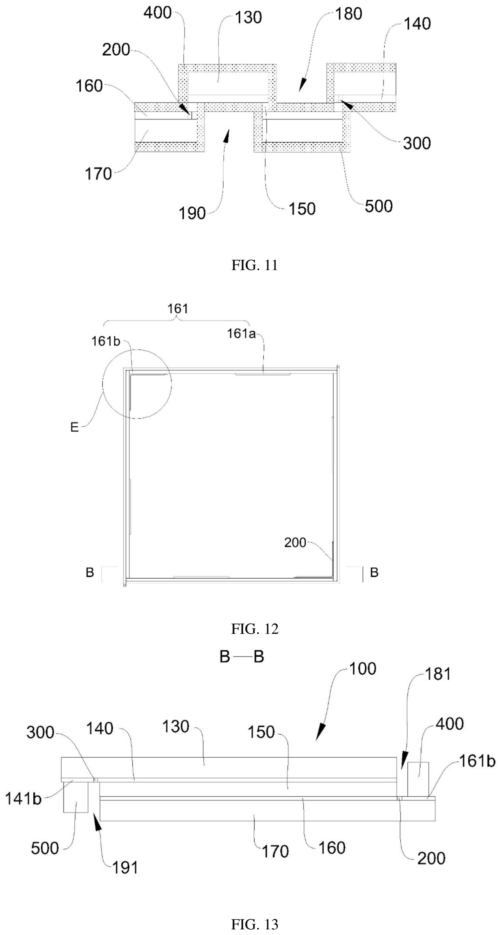

Optionally, improvements are made based on any of the above embodiments, as shown in FIGS. 10 and 11, the electrochromic film 100 includes a first substrate layer 130, a first conductive layer 140, an electrochromic layer 150, a second conductive layer 160, and a second substrate layer 170 stacked sequentially. The electrochromic film 100 has a central portion 110 formed by stacking the central portions 110 of the first substrate layer 130, the first conductive layer 140, the electrochromic layer 150, the second conductive layer 160, and the second substrate layer 170. The first substrate layer 130 extends outward from its central portion 110 to form an edge portion 120 of the first substrate layer 130, and the second substrate layer 170 extends outward from its central portion 110 to form an edge portion 120 of the second substrate layer 170. The projections of the edge portions 120 of the first substrate layer 130 and the edge portions 120 of the second substrate layer 170 onto the plane of the electrochromic layer 150 do not at least partially overlap. The first conductive layer 140 also extends outward from its central portion 110 and is attached to the surface of the edge portion 120 of the first substrate layer 130 to form the edge portion 120 of the first conductive layer 140. The second conductive layer 160 also extends outward from its central portion 110 and is attached to the surface of the edge portion 120 of the second substrate layer 170 to form the edge portion 120 of the second conductive layer 160. The edge portion 120 of the electrochromic film 100 includes the aforementioned edge portion 120 of the first substrate layer 130, the edge portion 120 of the first conductive layer 140, the edge portion 120 of the second substrate layer 170, and the edge portion 120 of the first conductive layer 140. Specifically, as shown in FIGS. 12 and 13, the edge portion 120 of the first substrate layer 130 and the edge portion 120 of the second substrate layer 170 can extend in opposite directions, that is, relative to the plane where the electrochromic film 100 is located, the first substrate layer and the second substrate layer extend in the X direction or the -X direction respectively, so that their projections do not overlap at all. In other embodiments, as shown in FIG. 10, the edge portions 120 of the first substrate layer 130 and the second substrate layer 170 may extend in the same direction. Optionally, in this embodiment, both the first and second substrate layers on each side extend outward from the electrochromic film 100 (outward from the paper in FIG. 10), so that their projections on the plane of the electrochromic layer 150 do not overlap at least partially, so as to form a multi-electrode structure. The first conductive layer 140 corresponding to the non-overlapping projections of the edge portions 120 of the first substrate layer 130 and the second substrate layer 170, respectively, is electrically connected to one busbar as the positive or negative electrode of the electrochromic film 100, and the second conductive layer 160 is electrically connected to another busbar as the negative or positive electrode of the electrochromic film 100, thereby providing voltage to the electrochromic layer 150.

In some embodiments of the present application, the first substrate layer 130 and the second substrate layer 170 are both transparent flexible materials, such as PET (Polyethylene terephthalate), PC, etc., and the first conductive layer 140 and the second conductive layer 160 are both transparent conductive oxides, such as ITO (Indium Tin Oxide), IZO, etc. In this embodiment, ITO is attached to the first substrate layer 130 and the second substrate layer 170 by magnetron sputtering. The electrochromic layer 150 includes an electrochromic material layer, an electrolyte layer, and an ion-conducting layer stacked sequentially. In other embodiments, the electrochromic layer 150 can also be a liquid crystal dimming layer, etc. By simultaneously connecting the first conductive layer 140 and the second conductive layer 160 to an external power source, an electric field can be formed between the first conductive layer 140 and the second conductive layer 160, causing the electrochromic layer 150 to undergo a stable and reversible color-changing under the action of the electric field.

Optionally, this embodiment of the present application further improves upon any of the above embodiments by including an etched region formed by etching a portion of a conductive layer and/or a filler with a resistance greater than that of the busbar. In this embodiment, the blocking portion employs laser etching of a portion of the conductive layer. The portion of the conductive layer can be a portion of the conductive layer in the thickness direction, or a conductive layer that penetrates through a portion of the width of the entire conductive layer, or a combination of both. Furthermore, the etched region can be a linear structure etched into a line, or it can be a planar structure with an etched portion.

Optionally, the blocking portion penetrates through the first conductive layer 140, the electrochromic layer 150, and the second conductive layer 160; and the blocking portion also penetrates through the first substrate and/or the second substrate. The present application further improves upon any of the above embodiments, and the blocking portion includes, but is not limited to, at least one of the following implementation methods: the blocking portion penetrates through the first conductive layer 140 and the second conductive layer 160; the blocking portion partially penetrates through the first conductive layer 140; the blocking portion partially penetrates through the second conductive layer 160; an insulating or high-resistance blocking portion is disposed between the second busbar 500 and the first conductive layer 140; or an insulating or high-resistance blocking portion is disposed between the first busbar 400 and the second conductive layer 160. A high-resistance blocking portion refers to a blocking portion whose resistance is not less than the resistance of the busbar. The insulating or high-resistance blocking portion can be any of the following: an insulating high-temperature adhesive, an insulating adhesive, or a high-resistance conductor. Alternatively, the first substrate layer 130 and/or the second substrate layer 170 can be used to prevent contact between the busbar and each conductive layer, i.e., no electrodes are arranged at the corners; the busbar can be directly attached to the edge of the electrochromic film 100 on the first substrate layer 130 and/or the second substrate layer 170.

Optionally, the embodiment of the present application further improves upon any of the above embodiments. When the first busbar 400 and the second busbar 500 are connected to an external power source, the second busbar 500 is connected to the central portion 110 of the first conductive layer 140 through the edge portion 120 of the first conductive layer 140, thereby conducting current to the central portion 110 of the first conductive layer 140, and/or the first busbar 400 is connected to the central portion 110 of the second conductive layer 160 through the edge portion 120 of the second conductive layer 160, conducting current to the central portion 110 of the second conductive layer 160, thereby forming a voltage across the two ends of the electrochromic layer 150, causing the color of the electrochromic layer 150 to change, thereby changing the transmittance of the visible region. In this embodiment of the present application, by providing the blocking portion, when the busbar is connected to an external power source, the current is conducted from the non-blocking portion region of the edge portion 120 (i.e., the region without a blocking portion) to the central portion 110 of the conductive layer; while the blocking portion blocks or reduces the current of the busbar from the region provided with the blocking portion to the central portion 110 of the electrochromic film 100; therefore, when the electrochromic film 100 is energized, the current in the region of the edge portion 120 of the electrochromic film 100 corresponding to the region provided with the blocking portion is lower than the current in the non-blocking portion region (the region without a blocking portion). Therefore, the blocking portion can be provided at a location where the electrochromic film 100 is more prone to failure, so that the current at that location is smaller than the current in regions where the current is more likely to rise in the prior art, thereby balancing the current uniformity of the entire film; thus, during the charging and discharging process of the electrochromic film 100, the electrochromic layer 150 in that region will not be overcharged or over-discharged, the possibility of failure is reduced and the performance and service life of the electrochromic film 100 is improved.

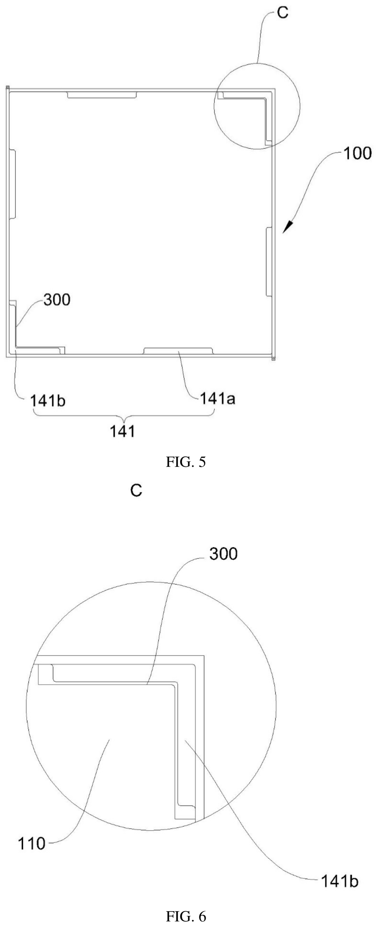

Optionally, further improvements are made based on any of the above embodiments, as shown in FIGS. 5, 7 and 11, with the edge portion 120 of the electrochromic film 100 provided with a first groove 180 and a second groove 190 at intervals. The number of the first groove 180 and the number of the second groove 190 can be one, two or more arbitrary values, and can be specifically set according to the actual situation. In this embodiment, the first grooves 180 and the second grooves 190 are alternately provided on each side of the electrochromic film 100. All the first grooves 180 and the second grooves 190 are alternately distributed in the circumferential direction of the entire edge portion 120, and an interval region is formed between adjacent first grooves 180 and second grooves 190.

The busbar includes a first busbar 400 and a second busbar 500, and the first busbar 400 and the second busbar 500 are respectively disposed on both sides of the electrochromic edge thickness direction.

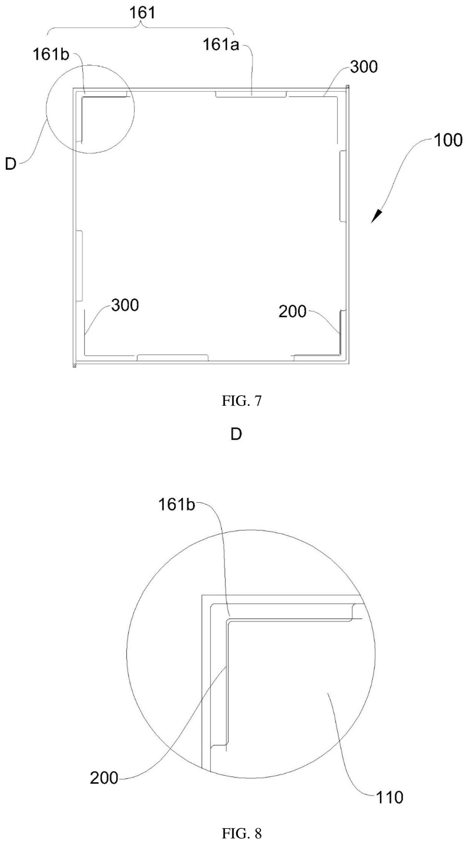

As shown in FIGS. 7 and 11, the first groove 180 penetrates through the first substrate layer 130, the first conductive layer 140, and the electrochromic layer 150 along the thickness direction of the electrochromic film 100 to expose a portion of the second conductive layer 160, so as to form a first electrode 161, which is electrically connected to the first busbar 400; in this embodiment, the region of the second conductive layer 160 exposed in the first groove 180 that contacts the external power source is the first electrode 161, which serves to conduct the external power source from the corner portion of the second conductive layer 160 to the central portion 110 of the second conductive layer 160 of the electrochromic film 100. It is understood that the second conductive layer 160 exposed from the first groove 180 is the first electrode 161. An external power source can form an electrical connection with the first electrode 161 through the first busbar 400, thereby connecting the second conductive layer 160 to the external power source through the first busbar 400.

Furthermore, as shown in FIGS. 5 and 11, the second groove 190 penetrates through the second substrate layer 170, the second conductive layer 160, and the electrochromic layer 150 along the thickness direction of the electrochromic film 100, exposing a portion of the first conductive layer 140 to form the second electrode 141. The second electrode 141 is electrically connected to the second busbar 500. In this embodiment, the region of the first conductive layer 140 exposed in the second groove 190 that contacts the external power source is the second electrode 141, which serves to conduct the external power source from the corner portion of the first conductive layer 140 to the central portion 110 of the first conductive layer 140 of the electrochromic film 100. It is understood that the first conductive layer 140 exposed from the second groove 190 is the second electrode 141. An external power source can form an electrical connection with the second electrode 141 through the second busbar 500, thereby connecting the first conductive layer 140 to the external power source through the second busbar 500.

In this embodiment of the present application, as shown in FIGS. 5, 7, and 11, the first groove 180 and the second groove 190 are alternately disposed at the edge of the electrochromic film 100, forming an alternately disposed first electrode 161 and second electrode 141. The electrochromic film 100 is electrically connected to the external power source by connecting the first electrode 161 to the positive or negative terminal of the external power source and by connecting the second electrode 141 to the negative or positive terminal of the external power source. The first electrode 161 and the second electrode 141 are alternately arranged circumferentially on the edge portion 120, allowing external power to be conducted from multiple locations circumferentially on the edge portion 120 of the conductive layer of the electrochromic film 100 to the central portion 110 of the conductive layer. The current diffuses inward from the periphery, which increases the electron conduction speed of the entire film and thus improves the color-changing speed of the electrochromic film 100. Furthermore, the alternating arrangement of the first electrode 161 and the second electrode 141 avoids short circuits between them, which improves the stability of the connection between the electrochromic film 100 and the external power supply, as well as the color-changing speed of the electrochromic film 100. It is worth noting that the present application describes an optional multi-electrode configuration.

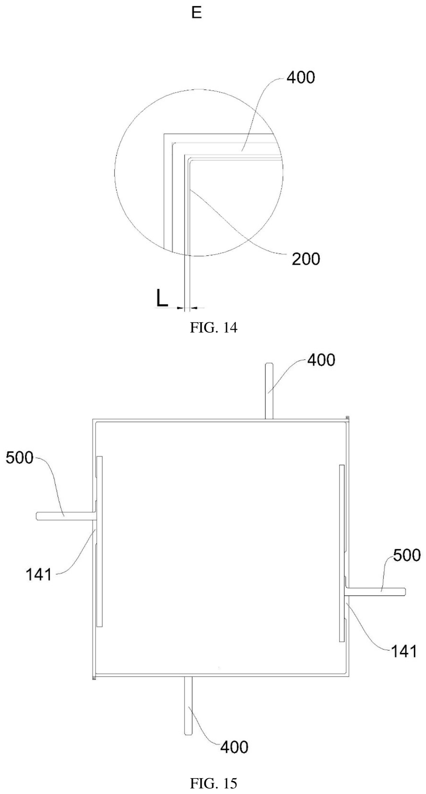

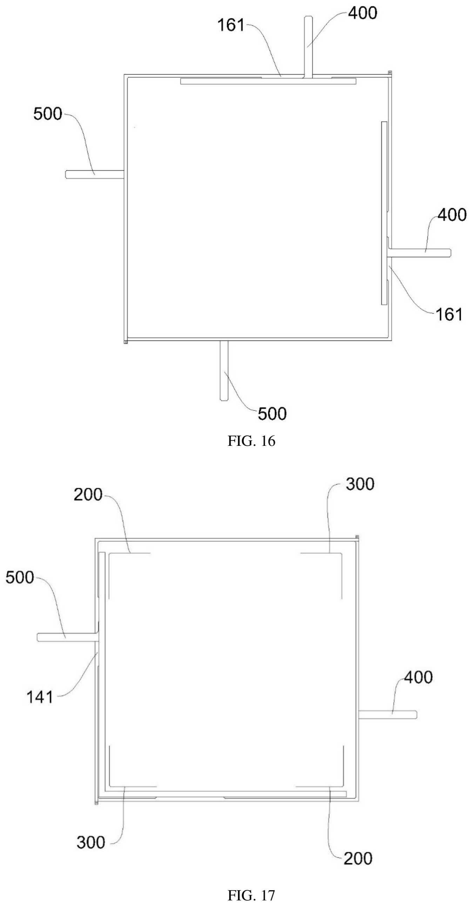

In other embodiments, as shown in FIGS. 15 and 16, two first grooves 180 can be provided, located in the middle of two sides respectively. As shown in the figures, the first grooves 180 are provided on any two adjacent sides or opposite sides. Two second grooves 190 can also be provided, located on two adjacent sides (as shown in FIG. 15) or opposite sides (as shown in FIG. 16). The two adjacent grooves are not connected to each other and form an interval region. At this time, since the two adjacent grooves are not connected to each other and form an interval region, the corresponding blocking portion is the interval region. This interval region does not contact the busbar, and the busbar will not conduct from the conductive layer at this location to the central portion 110 of the conductive layer, thus protecting the corner region. In other embodiments, the electrochromic edge shown in FIG. 17 can also be in the form of a single electrode. As shown in FIG. 17, one first groove 180 and one second groove 190 are provided. The first groove 180 is located on two adjacent sides, while the second groove 190 penetrates through two other adjacent sides. That is, the first substrate layer and the second substrate layer extend and expose in opposite directions, thereby forming a first electrode 161 and a second electrode 141. In this case, the blocking portion is provided in the corner region corresponding to the first electrode 161 and the second electrode 141, as well as in the corner region formed between the first electrode 161 and the second electrode 141, to block current conduction from the corner into the film. It is worth noting that the blocking portion penetrates through the conductive layer in contact with the busbar. That is, at the position corresponding to the ends of the first electrode 161 and the second electrode 141, one side of the blocking portion penetrates through the first conductive layer 140, and the other side penetrates through the second conductive layer 160.

Optionally, improvements are made based on any of the above embodiments. As shown in FIGS. 1 and 11, a plurality of first grooves 180 and a plurality of second grooves 190 are alternately arranged. The first electrode 161 includes a first straight-edge electrode 161a and a first corner electrode 161b. The first corner electrode 161b is located at the corner of the electrochromic film 100, and the first straight-edge electrode 161a is located at the straight edge of the electrochromic film 100, and the formation method of the first straight-edge electrode 161a is the same as that of the first electrode 161, except that the first straight-edge electrode 161a and the first corner electrode 161b are located at different positions; the first corner electrode 161b and the first straight-edge electrode 161a are spaced apart on the edge portion 120, and/or the second electrode 141 includes a second straight-edge electrode 141a and a second corner electrode 141b, the second corner electrode 141b being located at the corner of the electrochromic film 100, the second straight-edge electrode 141a being located at the straight edge of the electrochromic film 100, and the second corner electrode 141b and the second straight-edge electrode 141a being spaced apart on the edge portion 120. In this embodiment, the first electrode 161 includes a first straight-edge electrode 161a and a first corner electrode 161b, and the second electrode 141 includes a second straight-edge electrode 141a and a second corner electrode 141b.

Specifically, the blocking portion is provided corresponding to the first corner electrode 161b and/or the second corner electrode 141b. It is understood that the blocking portion is provided corresponding to the first corner electrode 161b, and/or the blocking portion is provided corresponding to the second corner electrode 141b.

When most electrochromic films 100 are used in vehicle windows and curtain walls, the edges of the corresponding electrochromic films 100 have a plurality of sides, forming a plurality of corners; therefore, a plurality of busbars are needed to overlap the plurality of corners together, and thus a plurality of corner electrodes are needed to set the overlap regions of the busbars. Specifically, as shown in FIGS. 1 to 4, the first corner electrode 161b and the second corner electrode 141b are respectively provided with blocking portions. In this embodiment, the electrochromic film 100 includes four sides connected end-to-end in sequence. The first corner electrode 161b and the second corner electrode 141b are located at the corners formed by adjacent sides, meaning a portion of the corner electrode is disposed at the end of one side of the film, and the other portion is disposed at the end of the adjacent side. A plurality of first straight-edge electrodes 161a and a plurality of second straight-edge electrodes 141a are alternately arranged on each side. The number of first straight-edge electrodes 161a and second straight-edge electrodes 141a is set according to the required length of each side of the electrochromic film 100. If the side length of the electrochromic film 100 is short, the first straight-edge electrodes 161a and second straight-edge electrodes 141a can be disposed on a single side. Optionally, in this embodiment, taking the first corner electrode 161b as an example, the adjacent side of the first corner electrode 161b is successively arranged with the second straight-edge electrode 141a, the first straight-edge electrode 161a, the second straight-edge electrode 141a, the first straight-edge electrode 161a, and so on, alternatively. Conversely, taking the second corner electrode 141b as an example, the adjacent side of the second corner electrode 141b is successively the first straight-edge electrode 161a, the second straight-edge electrode 141a, the first straight-edge electrode 161a, the second straight-edge electrode 141a, and so on, alternatively. In this embodiment, when the first busbar 400 is attached to one side of the electrochromic film 100 in the thickness direction, the first busbar 400 contacts and forms an electrical connection with the first corner electrode 161b and the first straight-edge electrode 161a, and the external current is conducted to the first corner electrode 161b and the first straight-edge electrode 161a through the first busbar 400; since the blocking portion is provided at the first corner electrode 161b in this embodiment, the blocking portion blocks or reduces the current conducted from the first corner electrode 161b to the central portion 110 of the electrochromic film 100, while no blocking portion is provided at the first straight-edge electrode 161a, the current is conducted from the first straight-edge electrode 161a to the central portion 110 of the second conductive layer 160. At the beginning of being energized, the current at the first corner electrode 161b corresponding to the first conductive layer 140 of the electrochromic film 100 is 0 or smaller than that at the first straight-edge electrode 161a, thereby reducing the electric field strength at the first corner electrode 161b. The electric field formed by the entire electrochromic film 100 will not concentrate at the corners but will be dispersed along the straight edges, achieving a balance in the electric field strength of the corner portion, the edge portion 120, and the central portion 110 of the electrochromic film 100. This prevents premature aging and failure of the electrochromic film 100 at the corners to improve the stability and durability of the electrochromic film 100. After a period of being energized, i.e., after being charged with a preset amount of electricity, the current in the central portion 110 of the first conductive layer 140 diffuses towards the corners of the first conductive layer 140, eventually reaching equilibrium, resulting in a uniform color-changing across the entire electrochromic film 100. Correspondingly, the blocking portion on the second corner electrode 141b is the same as that on the first corner electrode 161b, which will not be described again here. When the first corner electrode 161b and the second corner electrode 141b are electrically connected to an external power source through a busbar, the current is conducted to the first corner electrode 161b and the second corner electrode 141b through the busbar. During the process of the current conducted to both ends of the first corner electrode 161b spreading towards the central portion 110, a superimposed current is formed in the angled region of the first corner electrode 161b, so that the current of the first corner electrode 161b is greater than that of the central portion 110 of the electrochromic film 100. This results in an excessively high electric field intensity in the region corresponding to the first corner electrode 161b, causing accelerated aging or even failure in the region corresponding to the first corner electrode 161b. The principle of accelerated aging or even failure in the region corresponding to the second corner electrode 141b is the same as that of the first corner electrode 161b, which will not be described again here. Therefore, this embodiment of the present application provides blocking portions at the first corner electrode 161b and the second corner electrode 141b, so that when the electrochromic film 100 is electrically connected to an external power source, the blocking portions block or reduce the current conducted from the first corner electrode 161b and the second corner electrode 141b to the central portion 110 of the electrochromic film 100. Therefore, the current in the region corresponding to the first corner electrode 161b and the second corner electrode 141b is lower than the current in the region of the electrochromic film 100 without blocking portions, thereby preventing the electrochromic layer 150 corresponding to the first corner electrode 161b and the second corner electrode 141b from being overcharged or over-discharged, the possibility of failure is reduced, and thus the performance and service life of the electrochromic film 100 are improved.

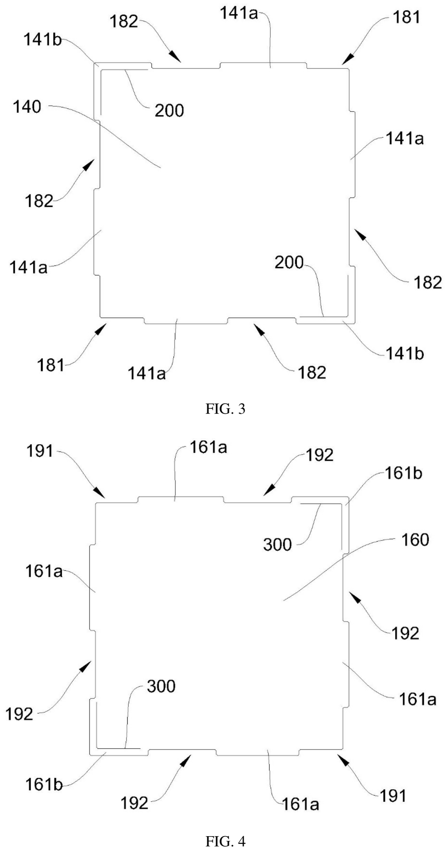

Optionally, improvements are made based on any of the above embodiments, as shown in FIGS. 3 and 4, the blocking portion includes a first blocking portion 200 and/or a second blocking portion 300. It is understood that the blocking portion includes a first blocking portion 200 or a second blocking portion 300. Or the blocking portion includes a first blocking portion 200 and a second blocking portion 300. In this embodiment, the first corner electrode 161b is correspondingly provided with the first blocking portion 200, and the second corner electrode 141b is correspondingly provided with the second blocking portion 300. The first blocking portion 200 and the second blocking portion 300 are both located on the side of the first busbar 400 near the central portion 110. By providing a blocking portion penetrating through the corresponding conductive layer at each corner electrode, the structure is simpler and more compact and symmetrical. The thickness of the film will not be locally too thick, thus affecting the lamination quality. Moreover, the manufacturing process is simple. It is only necessary to change the depth data of the first groove 180 or the second groove 190 at the corresponding corner when cutting the first groove 180 and the second groove 190.

Optionally, in conjunction with FIGS. 3 and 4, improvements are made based on any of the above embodiments, the blocking portion penetrates at least through the conductive layer of the edge portion 120 in contact with the busbar. The penetration method can be by laser etching of the corresponding conductive layer, or by etching the ITO of the corresponding part into an insulating material using an infrared laser. In this embodiment, the way the blocking portion penetrates through the conductive layer in contact with the busbar can include any of the following: penetrating from the substrate layer to the conductive layer attached to the substrate layer, or penetrating from the substrate layer to the electrochromic layer 150; or penetrating from the first conductive layer 140 to the second conductive layer 160. Specifically, as shown in FIGS. 4 and 12, in some embodiments of the present application, the first blocking portion 200 corresponding to the first corner electrode 161b penetrates at least through the conductive layer in contact with the busbar in the thickness direction of the electrochromic film 100. The first corner electrode 161b is exposed in the second conductive layer 160 after passing through the first substrate, the first conductive layer 140, and the electrochromic layer 150 via the first groove 180. Specifically, as shown in FIGS. 3 and 4, the first groove 180 corresponding to the first corner electrode 161b is defined as the first corner groove 181, and the first groove 180 corresponding to the first straight-edge electrode 161a is defined as the first straight-edge groove 182. Similarly, the second groove 190 corresponding to the second corner electrode 141b is defined as the second corner groove 191, and the second groove 190 corresponding to the second straight-edge electrode 141a is defined as the second straight-edge groove 192. At this time, since the first groove 180 has already been etched at the corner after the electrode is formed by cutting, it is only necessary to cut the blocking portion based on the first groove 180. This setting at the corner can effectively prevent current from being conducted from the first blocking portion 200 to the conductive layer, effectively preventing premature failure at the corner. In addition, the process of producing the film is simple, and the laser cutting process has low cost, which has the advantages of saving time and cost. In other alternative embodiments, the depth data of the first groove 180 at the corner can be directly modified when cutting the first groove 180 at the corner, such as setting the first groove 180 at the corner to penetrate through the first substrate, the first conductive layer 140, the electrochromic layer 150, and the second conductive layer 160. The first blocking portion 200 can be formed at any position between the edge of the first groove 180 and the busbar; in other embodiments, the first blocking portion 200 can also be disposed on the side of the groove near the center position, such as by infrared transmission through the second substrate to act on the second conductive layer 160 at the corresponding position, or by laser cutting through the second substrate and the second conductive layer 160. The method for forming the corresponding second blocking portion 300 through the second corner electrode 141b at least through the first conductive layer 140 in the thickness direction of the electrochromic film 100 can refer to any of the above-described methods for forming the first blocking portion 200, which will not be described in detail here.

Optionally, further improvements are made based on any of the above embodiments, as shown in FIGS. 1 to 2, and 7 to 8. The blocking portion at least penetrates through the first conductive layer 140 and the second conductive layer 160. The first blocking portion 200 penetrates through at least the first conductive layer 140 and the second conductive layer 160 in the thickness direction of the electrochromic film 100. Specifically, as shown in FIG. 7, the first blocking portion 200 can be laser-cut through at least one substrate layer to another substrate layer, or it can be cut from one side of the electrochromic film 100 to another side. Since the first blocking portion 200 penetrates through two conductive layers, penetrating the second conductive layer 160 which is in direct contact with the busbar, it can effectively prevent the edge portion 120 of the second conductive layer 160 from conducting current to the central portion 110, thereby effectively preventing corner failure. In addition, since the first blocking portion 200 also penetrates through the first conductive layer 140, it prevents the side of the first busbar 400 from contacting the side of the first groove 180, while the first conductive layer 140 contacts the side of the first groove 180 to conduct current, thereby effectively preventing the first busbar 400 from conducting current to the central portion 110 of the first conductive layer 140 and causing a short circuit, which would lead to film failure, and further improve the service life of the film. Optionally, as shown in FIGS. 1 and 2, the first blocking portion 200 extends from one side of the electrochromic film 100 in the thickness direction to another side. After the busbar is attached to the entire film, a groove can be formed by laser etching at the corresponding corner of the electrochromic film 100 using a laser method. The original process does not need to be modified; only the film itself needs to be improved. The original process route does not need to be changed, thus saving process design costs and simplifying the structure and process. Furthermore, the blocking portion extends along both adjacent sides and is parallel to the busbar. That is, the two ends of the first groove 180 are not etched, allowing the first corner electrode 161b to connect with other parts. The side edges of the two ends of the first corner electrode 161b are also connected to the entire second conductive layer 160, serving to support the busbar and provide conductivity.

Optionally, further improvements are made based on any of the above embodiments, as shown in FIGS. 7 and 11, the second blocking portion 300 extends at least through the first conductive layer 140 and the second conductive layer 160 in the thickness direction of the electrochromic film 100. It should be noted that the cutting method of the second blocking portion 300 can refer to the cutting method of the first blocking portion 200, and the principle of blocking the current and electric field of the second corner electrode 141b is the same as that of the first blocking portion 200, which will not be described in detail here. Optionally, the blocking portion penetrates through the electrochromic film 100 along the thickness direction of the electrochromic film 100.

Optionally, further improvements are made based on any of the above embodiments, as shown in FIGS. 12 and 14, the distance between the blocking portion and the busbar is within the range of 0.3 mm to 20 mm; so that a sufficient distance is reserved between the blocking portion and the busbar to allow space for the busbar to be bonded, preventing the busbar from being too wide and crossing the blocking portion to be attached to the side of the conductive layer near the central portion 110, thus failing to effectively prevent the busbar from conducting from the corner to the center. For example, as shown in FIGS. 12 and 14, there is a gap between the first busbar 400 and the first blocking portion 200, and/or, there is a gap L between the second busbar 500 and the second blocking portion 300. Optionally, the distance between the first blocking portion 200 and the first groove 180 is between 0.3 mm and 10 mm; optionally, the distance is 1 mm. The specific value can be adjusted according to the size of the electrochromic film 100; as shown in FIGS. 2 and 7, the distance between the first blocking portion 200 and the edge of the first groove 180 is 1 mm; in order to ensure that the distance between the first blocking portion 200 and the first groove 180 does not affect the range of the visible region, while effectively isolating the current from the blocking portion to the center, this distance needs to be set within a reasonable range. If the distance between the first blocking portion 200 and the first groove 180 is too large, it will affect the visible region of the entire film. If the distance between the first blocking portion 200 and the first groove 180 is too small, the first conductive layer 140 will be squeezed and directly contact the first busbar 400 during lamination, failing to effectively block current conduction. It is worth noting that when the first blocking portion 200 is disposed within the first groove 180, the distance between the first blocking portion 200 and the first groove 180 must meet the aforementioned range of 1-10 mm between the first blocking portion 200 and the first busbar 400. Furthermore, the distance between the second blocking portion 300 and the second busbar 500 also falls within the aforementioned range; its principle and formation method are the same as those of the first blocking portion 200, which will not be elaborated further here.

Optionally, in combination of FIGS. 5, 6, 7, and 8, further improvements are made based on any of the above embodiments, regardless of whether the blocking portion penetrates through a single conductive layer or two conductive layers; the blocking portion is a linear structure, including at least one of a straight line, a broken line, a curve, and an arc, and the shape of the blocking portion is adapted to the shape of the first groove 180 or the second groove 190. The linear blocking portion can be etched into an etching line by laser etching. In this embodiment, the blocking portion at least penetrates through the portion of the conductive layer in contact with the busbar. When the busbar transmits current to the edge portion 120 of the conductive layer, the presence of the blocking portion prevents the current from being transmitted to the central portion 110 of the conductive layer. Setting the blocking portion as a linear structure is simple and not abrupt. In addition, the shape of the blocking portion can be set according to the shape of the edge of the electrochromic film 100 to make it more coordinated with the film.

Optionally, further improvements are made based on any of the above embodiments. The blocking portion forms a blocking region with the outer edge of the electrochromic film 100, the first corner electrode 161b is located in the blocking region, and/or the second corner electrode 141b is located in the blocking region. As shown in FIGS. 5 and 6, the blocking portion is parallel to the edge of the busbar, and the shape of the blocking portion is adapted to the shape of the groove; the first blocking portion 200 and/or the second blocking portion 300 are "W" shaped structures. For example, as shown in FIG. 6, the second blocking portion 300 includes a first portion and a second portion extending along the extending direction of the second corner electrode 141b, one end of the first portion is connected to one end of the second portion; the other ends of the first portion and the second portion extend to be located between the second corner electrode 141b and the second straight-edge electrode 141a; the second blocking portion 300 also includes a third portion and a fourth portion, which are respectively disposed at both ends of the second corner electrode 141b. One end of the third portion extends to intersect the outer edge of the electrochromic film 100, and the other end extends to intersect the first portion. One end of the fourth portion extends to intersect the outer edge of the electrochromic film 100, and the other end extends to intersect the second portion. In other embodiments, the third and fourth portions do not intersect the outer edge of the electrochromic film 100, as long as they can effectively isolate the current conducted by the second corner electrode 141b. The second blocking portion 300 and the outer edge of the electrochromic film 100 enclose a blocking region independent of the central portion 110 of the first conductive layer 140 and insulated from the middle portion of the first conductive layer 140. The second corner electrode 141b is located in this blocking region. In this embodiment, since the second corner electrode 141b is completely surrounded by the blocking region, the current conducted by the second corner electrode 141b is limited to this blocking region, thereby reducing the influence of the field strength on the corner region and preventing it from failing. In this embodiment, the structure of the first blocking portion 200 is consistent with the structure of the second blocking portion 300, which will not be described in detail here.

Optionally, further improvements are made based on any of the above embodiments, the blocking portion further insulates and separates the first electrode 161 from the central region of the first conductive layer 140, and/or the blocking portion insulates and separates the second electrode 141 from the central region of the second conductive layer 160.

Optionally, further improvements are made based on any of the above embodiments, the blocking portion extends along at least one of the extending directions of the first corner electrode 161b, extending to the space between the first corner electrode 161b and the adjacent first straight-edge electrode 161a; and/or the blocking portion extends along at least one of the extending directions of the second corner electrode 141b, extending to the space between the second corner electrode 141b and the adjacent second straight-edge electrode 141a. As shown in FIGS. 2 and 7, the first blocking portion 200 has a zigzag structure. Specifically, the first blocking portion 200 and/or the second blocking portion 300 have an "L"-shaped structure. The blocking portion extends along adjacent sides and is parallel to the busbar. This means that the two ends of the second conductive layer 160 corresponding to the first groove 180 are not etched, allowing the first corner electrode 161b to connect with other parts. Furthermore, the side edges of both ends of the first corner electrode 161b are connected to the entire second conductive layer 160, serving to support the busbar and provide conductivity. Optionally, an interval region is formed between the corner electrode and the straight-edge electrode, the two ends of the blocking portion extend to correspond to the interval region, the current conduction from the interval region to the central region of the conductive layer is further reduced, and the possibility of corner failure is further reduced.

Optionally, further improvements are made based on any of the above embodiments. Specifically, the two ends of the "L"-shaped first blocking portion 200 extend towards the outer edge of the film, and a first isolation region is formed by the edges of the corners of the first blocking portion 200 and the electrochromic film 100. This isolation region isolates the first corner electrode 161b from the conductive layer inside the electrochromic film 100, meaning that the current conducted to the first blocking portion 200 cannot be conducted to the interior of the electrochromic film 100. Therefore, not only can corner failure of the electrochromic film 100 be prevented, but short circuits in the film can also be effectively prevented.

Furthermore, as shown in FIGS. 5 and 6, the principle of the shape setting of the second blocking portion 300 at the second corner electrode 141b is the same as that of the first blocking portion 200, which will not be described in detail here.

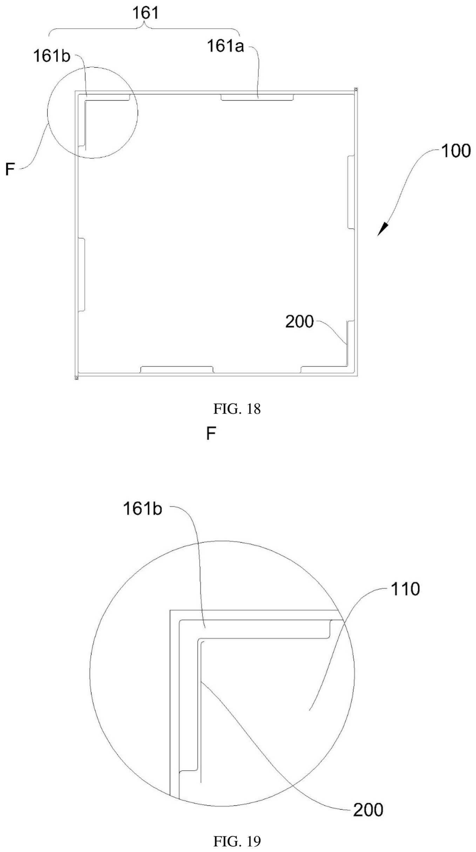

Optionally, further improvements are made based on any of the above embodiments, as shown in FIGS. 18 and 19, where the first blocking portion 200 extends along one side in a straight line, and/or the second blocking portion 300 extends along one side in a straight line. That is, the first corner electrode 161b includes a first segment and a second segment, and the first blocking portion 200 extends along the first segment or the second segment. For example, the first blocking portion 200 extends along the direction of the first segment; at this time, the effective electric field formed by the current at the corner current is diffused from the end of the second segment without provided with the first blocking portion 200 towards the first segment. Since the first segment is provided with the first blocking portion 200, the corresponding first segment will not form an electric field, which will be superimposed with the electric field formed by the second segment and cause the film to fail. With this setting, while ensuring effective prevention of film corner failure, the color-changing speed is guaranteed not to affect the user experience.

Optionally, further improvements are made based on any of the above embodiments, the total length of the blocking portion is less than the sum of the lengths of the first straight-edge electrode 161a and the second straight-edge electrode 141a. The length of the blocking portion affects the conduction speed of current from the busbar to the center of the conductive layer, thus affecting the color-changing speed of the electrochromic film 100. Therefore, by making the total length of the blocking portion to be less than the sum of the total lengths of the straight-edge electrodes, it is ensured that the electrochromic film 100 is effectively prevented from failing, while improving the electrochromic film 100, it also ensures that the electrochromic film 100 has a sufficient region for current conduction after being energized, allowing the electrochromic film 100 to change color quickly. This is especially important for large-area devices, where the speed of electrochromic change directly affects the visual experience of the user, thereby ensuring a good user experience.

Optionally, further improvements are made based on any of the above embodiments, the ratio of the total length of the blocking portion to the sum of the lengths of the first straight-edge electrode 161a and the second straight-edge electrode 141a ranges from 1:20 to 1:2; specifically, the ratio can be set according to the size of the electrochromic film 100, and the shape of the blocking portion can also be set according to the shape of the electrochromic film 100. Optionally, the length of each group of blocking portions is consistent, and the total length of the blocking portion accounts for 1/10 of the sum of the lengths of each side. If the length of the blocking portion is too short, and the region with a larger field strength formed by the busbars on adjacent sides of the electrochromic film 100 covers a larger region, the short blocking portion cannot effectively block the current, resulting in excessive local current, thus failing to effectively prevent premature failure of the electrochromic film 100. If the blocking portion is too long, it affects the color-changing speed of the electrochromic film 100.

Optionally, further improvements are made based on any of the above embodiments, the length of the blocking portion is not less than the length of the first straight-edge electrode 161a and/or the length of the second straight-edge electrode 141a. Optionally, the distance between the two ends of the blocking portion is not less than the length of the first straight-edge electrode 161a, and/or the distance between the two ends of the blocking portion is not less than the length of the second straight-edge electrode 141a. Optionally, the length of the first corner electrode 161b is not less than the length of the first straight-edge electrode 161a, and the length of the second corner electrode 141b is not less than the length of the second straight-edge electrode 141a. It is understood that the length of the corner electrode is equal to the length of the straight-side electrode, or the length of the corner electrode is greater than the length of the straight-side electrode.

For example, the first corner electrode 161b and the first straight-edge electrode 161a are of equal length, and are also equal to the second corner electrode 141b and the second straight-edge electrode 141a; the length of the first blocking portion 200 is not less than the length of the first corner electrode 161b, and the length of the second blocking portion 300 is not less than the length of the second corner electrode 141b. That is, the first blocking portion 200 is parallel to the first corner electrode 161b, and both ends extend beyond the ends of the first corner electrode 161b; the length of the first blocking portion 200 refers to the total length of the linear path of the first blocking portion 200, and the length of the second blocking portion 300 refers to the total length of the linear path of the second blocking portion 300. In addition, the length of the first corner electrode 161b refers to the length of the first corner electrode 161b along the corner path of the electrochromic film 100, and the length of the second corner electrode 141b refers to the length of the second corner electrode 141b along the corner path of the electrochromic film 100. The first blocking portion extends beyond the first corner electrode 161b, completely covering the length direction of the first corner electrode 161b. Current conducted by the busbar can only be conducted from both ends of the first corner electrode 161b, and cannot be conducted from the sides to the central portion 110 of the film. This effectively blocks the current conducted by the first corner electrode 161b, further preventing premature failure of the electrochromic film 100. By increasing the lengths of the first blocking portion 200 and the second blocking portion 300, the blocking quality of the first blocking portion 200 on the current in the first corner electrode 161b and the blocking quality of the second blocking portion 300 on the current in the second corner electrode 141b are improved.

Specifically, in this embodiment, by increasing the length of the first blocking portion 200, the distance between two ends of the first blocking portion 200 is increased, thereby increasing the path of current conduction from the first corner electrode 161b to the central portion 110 of the electrochromic film 100, reducing the current in the first corner electrode 161b, and thus effectively preventing corner failure.

In this embodiment, the principle of increasing the length of the second blocking portion 300 is the same as that of the first blocking portion 200, which will not be repeated here.

Optionally, further improvements are made based on any of the above embodiments. As shown in FIG. 9, the blocking portion is a planar structure, which includes at least one of polygonal, sectoral, and arc-shaped shapes. Furthermore, the shape of the blocking portion can be set to be similar to the shape of the corner of the electrochromic film 100, and the shape of the blocking portion can also be modeled after the edge corresponding to the visible region of the window. The blocking portion is set as a planar structure increasing the area of the blocking portion, further ensuring effective blocking of current conduction. On the other hand, the conductive layer corresponding to the corners that are prone to failure is removed to prevent some corner regions from failing due to overcharging and over-discharging of current after long-term use, thus accelerating the failure of other regions; the premature failure of the film is further effectively prevented and the service life of the film is improved. It is understood that the region corresponding to blocking portion being the planar structure on the electrochromic film 100 is the non-visible region. As shown in FIG. 9, the interior of the hexagon enclosed by the dashed lines is the visible region of the electrochromic film 100, while the region outside the dashed lines is the non-visible region of the electrochromic film 100.

The blocking portion is disposed on the side of the first corner electrode 161b and/or the second corner electrode 141b away from the edge of the electrochromic film 100. The blocking portion penetrates through at least the first conductive layer 140 and/or the second conductive layer 160. Optionally, the blocking portion penetrates through the conductive layer in contact with the corresponding busbar, which is equivalent to only needing to cut a single layer of conductive layer. During the fabrication of the electrochromic film 100, the conductive layer in a certain region can be directly removed during the fabrication of the conductive layer. Alternatively, an infrared laser can be used to penetrate the substrate layer and act on the conductive layer, the process is simpler and the effect is better.

Specifically, the blocking portion is disposed on the side of the first corner electrode 161b away from the edge of the electrochromic film 100, and the blocking portion penetrates at least through the first conductive layer 140 and the second conductive layer 160. It should be noted that in this embodiment, by removing the first conductive layer 140 and/or the second conductive layer 160 in the region formed by the line connecting the two ends of the first corner electrode 161b, a hollow region (i.e., the first blocking portion 200) is formed in the conductive layer corresponding to the first corner electrode 161b. The shape of this hollow region is triangular, arc-shaped, or fan-shaped, etc. It can be understood that by separating the first corner electrode 161b from the central portion 110 through this hollow region (the first blocking portion 200), no current flows through the first corner electrode 161b, which is equivalent to the resistance of the first corner electrode 161b being infinitely large. This achieves field strength balance between the corner and non-corner regions of the electrochromic film 100, and the overall performance of the electrochromic film 100 is improved.

In addition, in some embodiments of the present application, the blocking portion is disposed on the side of the second corner electrode 141b away from the edge of the electrochromic film 100, and the blocking portion penetrates at least through the first conductive layer 140 and the second conductive layer 160. It should be noted that the principle of the blocking portion being disposed on the second corner electrode 141b is the same as that of the blocking portion being disposed on the first corner electrode 161b, which will not be described in detail here.

Optionally, the blocking portion includes a component with a resistance greater than that of the busbar; further improvements are made based on any of the above embodiments, the resistance of the first corner electrode 161b is greater than the resistance of the first straight-edge electrode 161a. It is understood that, due to the larger resistance of the first corner electrode 161b, the current conducted to the first corner electrode 161b is less than the current conducted to the first straight-edge electrode 161a. Because a smaller current results in a smaller electric field strength around it, i.e., the electric field strength of the first corner electrode 161b is less than that of the first straight-edge electrode 161a, the electric field strengths at both ends of the first corner electrode 161b are superimposed within the region enclosed by the first corner electrode 161b. This ensures that the electric field strength at the first corner electrode 161b is essentially equal to that at the first straight-edge electrode 161a, thus achieving a balanced electric field.

Optionally, the resistance of the second corner electrode 141b is greater than that of the second straight-edge electrode 141a. The principle of the second corner electrode 141b blocking current and preventing corner failure is the same as that of the first corner electrode 161b, which will not be elaborated further. The first corner electrode 161b and the second corner electrode 141b can be made of a conductive material with a higher resistance than the straight edge electrode, and finally overlapped with the straight edge electrode to form a ring-shaped conduction.

Optionally, further improvements are made based on any of the above embodiments, by increasing the resistance of the first corner electrode 161b, which includes increasing the resistance of the first busbar 400 electrically connected to the first corner electrode 161b, i.e., reducing the thickness of the first busbar 400 corresponding to the first corner electrode 161b, thereby reducing the current conducted to the first corner electrode 161b.

Optionally, further improvements are made based on any of the above embodiments, by increasing the resistance of the first corner electrode 161b, which includes connecting a series resistor in the busbar between the first corner electrode 161b and the first straight-edge electrode 161a, and setting the lead-out structure of the busbar at the first straight-edge electrode 161a, so as to form an electrical connection between the busbar and an external power source through the lead-out structure. It is understood that by connecting a resistor in series, when the lead-out structure forms an electrical connection with the external power source, the increased resistance value of the resistor electrically connected to the first corner electrode 161b reduces the current conducted to the first corner electrode 161b.

Optionally, further improvements are made based on any of the above embodiments the method of increasing the resistance of the first corner electrode 161b includes reducing the thickness of the second conductive layer 160 corresponding to the first straight-edge electrode 161a. It is understood that since the thickness of the second conductive layer 160 corresponding to the first straight-edge electrode 161a is reduced, the resistance of the first straight-edge electrode 161a increases. Therefore, the current conducted to the first straight-edge electrode 161a decreases, that is, the electric field strength of the first straight-edge electrode 161a decreases, thereby reducing the current and electric field strength conducted to the first corner electrode 161b. In this embodiment, since the thickness of the busbar at the end electrically connected to the first corner electrode 161b is reduced, the resistance of the busbar electrically connected to the first corner electrode 161b is increased, thereby reducing the current conducted to the first corner electrode 161b through the busbar, that is, the electric field strength formed by the first corner electrode 161b within the film is reduced.

Furthermore, the method of increasing the second corner electrode 141b is the same as the method of increasing the first corner electrode 161b, which will not be described in detail here.

Optionally, further improvements are made based on any of the above embodiments, the blocking portion is disposed between the busbar and the conductive layer, and the resistance of the blocking portion is greater than the resistance of the busbar. Optionally, the blocking portion covers the projection of the conductive layer onto the plane where the electrochromic film is located, or the blocking portion covers the exposed conductive layer, i.e., the corresponding electrode. For example, the blocking portion covers the first corner electrode 161b and/or the second corner electrode 141b at the corner. As shown in FIG. 10, in some embodiments of the present application, the first blocking portion 200 is disposed between the busbar and the first corner electrode 161b, and the blocking portion can be an insulating high-temperature adhesive, an insulating adhesive, or other materials with high resistance. The first blocking portion 200 is provided between the first busbar 400 and the first corner electrode 161b. The first blocking portion 200 separates the first busbar 400 from the first corner electrode 161b, preventing direct contact between the busbar and the first corner electrode 161b. The first blocking portion 200 blocks or reduces the current conduction from the first busbar 400 to the first corner electrode 161b, thereby reducing the magnitude of the current conducted to the first corner electrode 161b and reducing the electric field strength of the corresponding conductive layer of the first corner electrode 161b.

Optionally, the second blocking portion 300 is disposed between the busbar 500 and the second corner electrode 141b, that is, the second blocking portion 300 is provided between the second busbar 500 and the second corner electrode 141b. This second blocking portion 300 separates the second busbar 500 from the second corner electrode 141b, preventing direct contact between the second busbar 500 and the second corner electrode 141b. The second blocking portion 300 blocks, restricts, or reduces the current conduction from the second busbar 500 to the second corner electrode 141b, thereby reducing the magnitude of the current conducted to the second corner electrode 141b and reducing the electric field strength at the second corner electrode 141b.

Furthermore, in some embodiments of the present application, the resistance value of the first blocking portion 200 is greater than the resistance value of the first busbar 400, and the resistance value of the second blocking portion 300 is greater than the resistance value of the second busbar 500. By providing blocking portions with higher resistance, the surface resistance of the local region of the film is increased, thereby effectively reducing the magnitude of the conducted current.

It should be noted that in some embodiments of the present application, the first blocking portion 200 and the second blocking portion 300 are respectively insulating materials, including insulating adhesive or high-temperature adhesive, so as to block the current on the first busbar 400 from being conducted to the first corner electrode 161b through the first blocking portion 200, and to block the current on the second busbar 500 from being conducted to the second corner electrode 141b through the second blocking portion 300, thereby avoiding the influence of the electric field at the first corner electrode 161b and the electric field at the second corner electrode 141b on the interior of the electrochromic film 100, so as to improve the stability of the electrochromic film 100 and the balance between the electric field at the corner and the electric field at the non-corner of the electrochromic film 100, thereby improving the service life of the electrochromic film 100. Furthermore, the first busbar 400 and the second busbar 500 can be bonded to the electrochromic film 100 using insulating adhesive and high-temperature adhesive, thereby improving the stability of the connection between the first busbar 400 and the second busbar 500 and the electrochromic film 100, respectively.

Some embodiments of the present application also provide a color-changing device, which includes a substrate layer and an electrochromic film 100 as described in any of the above embodiments, which is stacked with the substrate layer.

Specifically, the substrate layer is a transparent structure; for example, the substrate layer can be a transparent glass, a transparent acrylic sheet, or a transparent PVC sheet, etc. Optionally, the substrate layer is a glass, and two substrate layers are provided. Alternatively, an electrochromic film 100 can be sandwiched between the two substrate layers. An adhesive such as PVB or OCA is provided between the electrochromic film 100 and the substrate layers. The edges of the electrochromic film 100 are sealed with a sealant at its outer periphery, and the two substrate layers are connected by the sealant to form a sealed color-changing device. The sealant is a transparent insulating colloid, such as PVB (Polyvinyl Butyral) or OCA (Optically Clear Adhesive).

Furthermore, the sealant not only forms an adhesive between the two substrate layers and the electrochromic film 100, but also seals the electrochromic film 100 to isolate it from oxygen and air, preventing it from contacting external moisture and oxygen, thereby improving the service life of the electrochromic film 100 and the service life of the color-changing device.

In addition, a shielding layer is provided on the inner surface of the substrate layer corresponding to the edge portion 120 of the electrochromic film 100. In order to prevent the user from directly observing the edge portion 120 of the electrochromic film 100 through the transparent substrate layer, the shielding layer is provided at the edge of the substrate layer. This shielding layer shields the busbar and blocking portion at the edge of the electrochromic film 100, thereby improving the aesthetics of the color-changing device. Optionally, the shielding layer is an ink layer.

Specifically, in some embodiments of the present application, when the blocking portion is located on the side of the busbar away from the edge of the electrochromic film 100, and the projection of the blocking portion onto the plane where the shielding layer is located within the shielding layer; the vertical distance between the blocking portion (in this case, the blocking portion refers to the first blocking portion 200) and the busbar is L1.

For example, the vertical distance between the side of the first blocking portion 200 adjacent to the first groove 180 and the side of the first groove 180 adjacent to the first blocking portion 200 is L₁.

The value range of L₁ is 1mm ≤ L1 ≤ 20mm.

In addition, the vertical distance between the side of the second blocking portion 300 adjacent to the second groove 190 and the side of the second groove 190 adjacent to the second blocking portion 300 is L₂.

The value range of L₂ is 1mm ≤ L2 ≤ 20mm.

It should be noted that by adjusting the distance between the blocking portion and the groove, the first blocking portion 200 and the second blocking portion 300 are respectively projected onto the plane where the shielding layer is located, and the shielding layer can completely cover the first blocking portion 200 and the second blocking portion 300, thereby not affecting the normal visual effect of the user observing the color-changing device, while ensuring the aesthetics of the color-changing device.

Furthermore, it is understood that by controlling the value ranges of L₁ and L₂, the distances from the first blocking portion 200 and the second blocking portion 300 to the edge of the electrochromic film 100 are controlled, thereby avoiding the influence of the first blocking portion 200 and the second blocking portion 300 on the effective color-changing area of the electrochromic film 100, and thus ensuring the effective color-changing area of the electrochromic film 100.

Optionally, another aspect of the embodiments of the present application also provides a terminal product, which includes the electrochromic film 100 or the color-changing device as described in any of the above embodiments. The terminal product includes any one of a rearview mirror, a curtain wall, a sunroof of a vehicle, a side window of a vehicle, a windshield of a vehicle, a housing of an electronic product, eyeglasses, means of transportation, and a display panel. In this embodiment, since the above-mentioned electrochromic film 100 or color-changing device is used, all the advantages of the above-mentioned color-changing film and color-changing device are achieved. The risk of corner failure is reduced, and the product lifespan is extended.

In all examples shown and described herein, any specific value should be interpreted as merely exemplary and not as a limitation; therefore, other examples of exemplary embodiments may have different values.

It should be noted that similar reference signs and letters in the following figures denote similar items; therefore, once an item is defined in one figure, it does not need to be further defined and explained in subsequent figures.

The embodiments described above merely illustrate several implementations of the present application, and their descriptions are relatively specific and detailed, but they should not be construed as limiting the scope of the present application. It should be pointed out that for those skilled in the art, several modifications and improvements are made without departing from the concept of the present application, and these all fall within the protection scope of the present application.

### Industrial Applicability

The present application provides an electrochromic film, a color-changing device, and a terminal product. The electrochromic film includes a central portion and an edge portion adjacent to the central portion, the edge portion being electrically connected to a busbar; at least a local region of the edge portion is provided with a blocking portion, through which the current of the busbar is blocked or reduced from being conducted from the blocking portion to the central portion. By providing blocking portion at the edge of the electrochromic film, the current from the busbar is blocked or reduced from being conducted from the blocking portion to the central portion of the electrochromic film. This prevents current from directly flowing from the conductive layer provided with the blocking portion to the conductive layer in the central portion, or reduces the current flowing from the conductive layer provided with the blocking portion to the conductive layer in the central portion. This avoids failure caused by overcharging or over-discharging in the corner regions of the electrochromic film, thereby improving the stability and uniformity of the electric field strength of the electrochromic film and extending the service life of the electrochromic film.

Furthermore, it is understood that the electrochromic film, the color-changing device, and the terminal product of the present application are reproducible and can be used in various industrial applications. For example, the electrochromic film, the color-changing device, and the terminal product of the present application can be used in the field of electrochromic technology.

## Claims

1. An electrochromic film, comprising a central portion and an edge portion adjacent to and connected to the central portion, and the edge portion being electrically connected to a busbar;
wherein at least a local region of the edge portion is provided with a blocking portion, such that a current from the busbar is blocked or reduced from being conducted toward the central portion at the location of the blocking portion.

2. The electrochromic film according to claim 1, wherein the blocking portion is located at a corner of the edge portion.

3. The electrochromic film according to claim 2, wherein the corner comprises a vertex and two ends with edges connected to each other, the edge portion located between two points is divided into a first segment and a second segment, when a line tangent to the first segment through a point is a first tangent line, and a line tangent to the second segment through the point is a second tangent line; wherein the angle between the first tangent line and the second tangent line is less than 135°, then the point is the vertex of the corner; or a perpendicular distance from any point on the edge portion corresponding to two points at a first preset distance to a line segment connecting the two points is a second preset distance; when the second preset distance is greater than *n* times the first preset distance, *n* ranges from 5% to 10%, and the edge portion corresponding to the two points is the corner.

4. The electrochromic film according to claim 3, wherein a value of the first preset distance ranges from 30 mm to 300 mm.

5. The electrochromic film according to claim 1, wherein the blocking portion comprises an etched region formed by etching a portion of a conductive layer and/or a component with a resistance greater than that of the busbar.

6. The electrochromic film according to claim 5, wherein the blocking portion at least penetrates through the conductive layer of the edge portion in contact with the busbar and is located on a side of the busbar adjacent to the central portion; and/or the blocking portion is disposed between the busbar and the conductive layer, and a resistance of the blocking portion is greater than a resistance of the busbar.

7. The electrochromic film according to claim 1, wherein the electrochromic film comprises a first substrate layer, a first conductive layer, an electrochromic layer, a second conductive layer, and a second substrate layer stacked sequentially; the edge portion is provided with a first groove and a second groove, and the busbar comprises a first busbar and a second busbar;
the first groove penetrates through the first substrate layer, the first conductive layer, and the electrochromic layer along a thickness direction of the electrochromic film to expose a portion of the second conductive layer, forming a first electrode, and the first electrode is electrically connected to the first busbar; and
the second groove penetrates through the second substrate layer, the second conductive layer, and the electrochromic layer along the thickness direction of the electrochromic film to expose a portion of the first conductive layer, forming a second electrode, and the second electrode is electrically connected to the second busbar.

8. The electrochromic film according to claim 7, wherein the blocking portion arranged corresponding to the first electrode penetrates through the second conductive layer, and/or the blocking portion arranged corresponding to the second electrode penetrates through the first conductive layer.

9. The electrochromic film according to claim 8, wherein the blocking portion insulates and separates the first electrode from the central region of the first conductive layer, and/or the blocking portion insulates and separates the second electrode from the central region of the second conductive layer.

10. The electrochromic film according to claim 7, wherein the first electrode comprises a first straight-edge electrode and a first corner electrode, the first corner electrode is located at the corner of the electrochromic film, the first corner electrode and the first straight-edge electrode are spaced apart from each other on the edge portion, and the blocking portion is disposed corresponding to the first corner electrode; and/or the second electrode comprises a second straight-edge electrode and a second corner electrode, the second corner electrode is located at the corner of the electrochromic film, the second corner electrode and the second straight-edge electrode are spaced apart from each other on the edge portion, and the blocking portion is disposed corresponding to the second corner electrode.

11. The electrochromic film according to claim 7, wherein the blocking portion penetrates through at least the first conductive layer and the second conductive layer.

12. The electrochromic film according to claim 7, wherein the blocking portion penetrates through the first conductive layer, the electrochromic layer, and the second conductive layer; and the blocking portion further penetrates through the first substrate and/or the second substrate.

13. The electrochromic film according to claim 9, wherein a total length of the blocking portion is less than a sum of lengths of the first straight-edge electrode and the second straight-edge electrode.

14. The electrochromic film according to claim 10, wherein a length of the blocking portion is not less than a length of the first corner electrode, and/or a length of the blocking portion is not less than a length of the second corner electrode.

15. The electrochromic film according to claim 14, wherein the blocking portion extends along at least one of extending directions of the first corner electrode, and extends to be located between the first corner electrode and an adjacent first straight-edge electrode; and/or the blocking portion extends along at least one of extending directions of the second corner electrode, and extends to be located between the second corner electrode and an adjacent second straight-edge electrode.

16. The electrochromic film according to claim 14, wherein the blocking portion forms a blocking region with an outer edge of the electrochromic film, the first corner electrode is located in the blocking region, and/or the second corner electrode is located in the blocking region.

17. The electrochromic film according to any one of claims 1-16, wherein the blocking portion is a linear structure, and the linear structure comprising at least one of a straight line, a broken line, a curve, and an arc.

18. The electrochromic film according to any one of claims 1-16, wherein the blocking portion is a planar structure, and the planar structure comprising at least one of a polygon, a sector, and an arc surface.

19. The electrochromic film according to any one of claims 1-16, wherein a distance between the blocking portion and the busbar ranges from 0.3 mm to 20 mm.

20. The electrochromic film according to claim 19, wherein the distance between the blocking portion and the busbar is 1 mm.

21. A color-changing device, comprising a substrate layer and an electrochromic film according to any one of claims 1-20 stacked with the substrate layer.

22. A terminal product, comprising an electrochromic film according to any one of claims 1-20 or a color-changing device as described in claim 21, wherein the terminal product comprises any one of a rearview mirror, a curtain wall, a sunroof of a vehicle, a side window of a vehicle, a windshield of a vehicle, a housing of an electronic product, eyeglasses, means of transportation, and a display panel.
